# EUROPÄISCHE PATENTSCHRIFT

(11) **EP 0 544 979 B1**
(45) Veröffentlichungstag und Bekanntmachung des Hinweises auf die Patenterteilung: **27.11.1996**
(21) Anmeldenummer: 92106312.9
(22) Anmeldetag: 11.04.1992
(51) Int. Cl.: A22C 11/02

(54) **Wurstfüllrohr**
Sausage stuffing horn
Cornet de bourrage de saucisses

(30) Priorität: 04.12.1991 DE 9115053 U
(43) Veröffentlichungstag der Anmeldung: 09.06.1993
(73) Patentinhaber: Devro-Teepak, Inc., Westchester, Illinois 60154 (US)
(72) Erfinder: Tschierse, Fred, W-5830 Schwelm (DE); Schulz, Thomas, W-5880 Lüdenscheid (DE); Kreibig, Klaus Peter, W-5600 Wuppertal 1 (DE)
(74) Vertreter: UEXKÜLL & STOLBERG

(56) Entgegenhaltungen:
- EP-A- 0 145 024
- DE-A- 2 236 081
- DE-A- 3 212 164
- DE-U- 9 108 000
- FR-A- 2 644 678
- GB-A- 918 250
- GB-A- 1 241 210

## Beschreibung

Die Erfindung betrifft ein Wurstfüllrohr mit oder ohne Ansatzstück und mit einem Mündungsstutzen, über den der Darm im Betrieb gezogen und von einer Darmbremse an die Außenwand des Mündungsstutzens angedrückt wird. Ein derartiges Wurstfüllrohr ist aus der GB-A-918 250 bekannt.

Wurstfüllrohre werden aus hygienischen Gründen aus Edelstahl oder einem anderen resistenten Stoff hergestellt und haben eine hochfeine, polierte Oberfläche. Sie müssen außerdem sehr genau dimensioniert sein, damit im Betrieb verschiedene Wurstfüllrohre mit ein und derselben Darmbremse zuverlässig eingesetzt werden können. Wenn die Darmbremse zu lose eingestellt ist, dann wird zu wenig Brät in den Darm gefüllt und der Darm kommt nicht auf das empfohlene Füllkaliber. Ist sie hingegen zu fest eingestellt, so kann es zum Aufreißen des am Ende mit einer bekannten Klippvorrichtung verschlossenen Darms kommen. Der Clip kann dabei auch abspringen. Aber selbst wenn Wurstfüllrohre mit sehr genauer Maßhaltigkeit des Außendurchmessers verwendet werden, läßt sich der Darm mit einer üblichen Darmbremse aufgrund der glatten Oberfläche des Wurstfüllrohres nur schlecht abbremsen.

Die GB-A-1 241 210 betrifft hingegen gar kein starres Wurstfüllrohr der zuvor genannten Art, sondern ein flexibles Kunststoffrohr aus PVC mit einer Wandstärke von nur 0,2 bis 0,6 mm, das lediglich als Träger für einen gefältelten Kunststoffdarm dient, der von sich aus die Faltenbalgform nicht beibehält und daher von Scheiben gehalten werden muß. Dieses Trägerrohr soll eine so dünne Wandstärke haben, daß es sich durch Fingerdruck leicht von der Kreisform in eine elliptische Form drücken läßt. Es ist jedem Fachmann klar, daß ein derartiges Rohr als Wurstfüllrohr völlig ungeeignet ist, denn eine Darmbremse könnte auf ein solch flexibles Rohr nicht einwirken; sie würde das Rohr verformen, den Darm aber nicht festhalten können.

Es ist daher **Aufgabe** der Erfindung, das Zusammenwirken von Wurstfüllrohren und Darmbremse bei einer bekannten Wurstfüllmaschine dahingehend zu verbessern, daß der Darm in kontrollierter Weise hinreichend abgebremst werden kann.

Zur **Lösung** dieser Aufgabe dient ein Wurstfüllrohr mit einem trichterförmigen Füllstutzen und einem Mündungsstutzen, über den im Betrieb der Darm gezogen ist und von einer Darmbremse gegen die Außenwand des Mündungsstutzens gedrückt wird, welches dadurch gekennzeichnet ist, daß das Endstück des Mündungsstutzens eine gerauhte Oberfläche hat.

Dadurch wird erreicht, daß die an sich bekannte Darmbremse den Darm stets mit einer gut definierten Andruckkraft an das Wurstfüllrohr anpreßt und den Darm im Bereich des Mündungsstutzens hinreichend und zuverlässig abbremst.

Vorzugsweise ist die gerauhte Oberfläche des Mündungsstutzens rauhgeschliffen.

Dies kann dadurch erreicht werden, daß das Rohr mit einem Schleifband mit einer Körnung von 20 bis 180 gemessen nach VEPA Norm geschliffen wird, beispielsweise dadurch, daß man das Wurstfüllrohr auf einer Drehbank dreht und das Schleifband mit dem Außenumfang des Wurstfüllrohres in Eingriff bringt.

In einer Weiterbildung der Erfindung wird die rauhgeschliffene Oberfläche des Wurstfüllrohr-Mündungsstutzens gehärtet, um zu verhindern, daß die Aufrauhungen der Oberfläche im Betrieb vom dem durch die Darmbremse angepreßten Darm allmählich glattgeschliffen werden.

Das Härten erfolgt auf für den Fachmann bekannte Weise, beispielsweise durch eine Beeinflussung der Randschicht mit oder ohne Änderung der chemischen Zusammensetzung oder durch eine Aufbringung von Überzügen.

Zu der Beeinflussung der Randschicht ohne Änderung der chemischen Zusammensetzung zählen folgende Oberflächenbehandlungsverfahren:

Mechanische Behandlungsverfahren wie Strahlen, Rollen oder Polieren.

Thermische Behandlungsverfahren wie Induktionshärten, Flammhärten oder Härten mittels Hochenergieerwärmung, Elektronenstrahlhärten oder Laserstrahlhärten.

Zu den Oberflächenbehandlungsverfahren, die die Randschicht beeinflussen und die eine Änderung der chemischen Zusammensetzung bewirken, gehören:

Thermochemische Behandlungsverfahren wie Aufkohlen, Nitrieren, Karbonitrieren, Karbotitanieren, Vanadinieren, Sulfidieren, Sufonitrieren, Aluminieren, Alitieren, Chromieren, Inchromieren, Silizieren, Borieren, Oxidieren, Dampfanlassen, Phosphatieren, Oxalatieren u. a..

Das Aufbringen von Überzügen kann auf mechanische, thermische, thermomechanische, elektrochemische oder chemische Weise erfolgen. Zu den mechanischen Verfahren gehört zum Beispiel das Platieren. Zu den thermischen Verfahren gehören Schmelzen, Sintern oder Elektrofunkenverfestigen. Das Schmelzverfahren läßt sich dabei noch durch Verzinnen, Verbleien, Aufschweißen oder Aufpanzern durchführen.

Zu den thermomechanischen Verfahren gehören das Spritzen und das Detonationsbeschichten.

Zu den elektrochemischen Verfahren gehören Verchromen, Vernickeln, Verzinnen oder Verkupfern.

Zu der chemischen Aufbringung von Überzügen gehört beispielsweise die stromlose Nickelabscheidung.

Außerdem lassen sich die Oberflächen noch durch Gasphasenabscheidung, durch CVD-Beschichtung oder PVD-Beschichtung durchführen.

Obgleich es für den Fachmann keine Schwierigkeiten bereitet, sich das jeweils geeignete Verfahren aus den bekannten Oberflächenbehandlungsverfahren auszuwählen, wurde im vorliegenden Fall die rauhgeschliffene Oberfläche des Mündungsstutzens durch Nitrieren gehärtet. Anschließend wurde die Oberfläche des gehärteten Mündungsstutzens noch entgiftet.

Vorzugsweise wird der Mündungsstutzen nicht als Teil des Wurstfüllrohrs, sondern als eigener Abschnitt hergestellt, der in das Wurstfüllrohr eingeschraubt wird.

Dadurch wird erreicht, daß im Falle eines verschlissenen Mündungsstutzens nicht das gesamte Wurstfüllrohr ausgetauscht zu werden braucht, sondern man schraubt einfach den Mündungsstutzen ab und ersetzt ihn durch einen neuen mit rauhgeschliffener und gehärteter oder auch ungehärteter Oberfläche.

Die Erfindung wird im folgenden anhand einer Zeichnung näher erläutert, die ein Wurstfüllrohr in Ansicht, zum Teil geschnitten, zeigt.

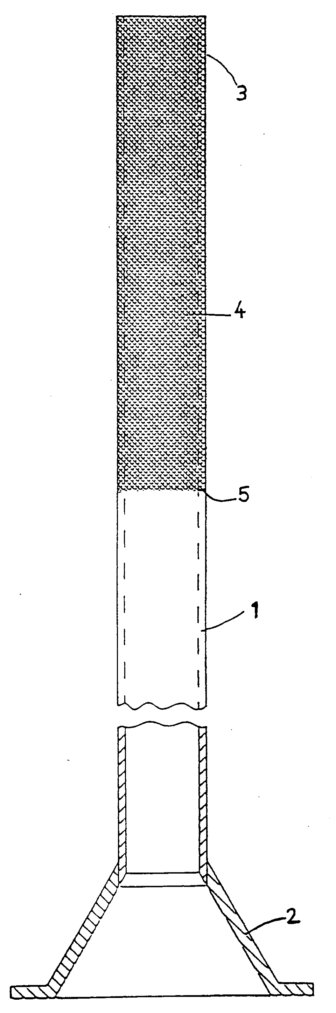

Das in der Zeichnung dargestellte Wurstfüllrohr umfaßt ein im wesentlichen zylindrisches Rohr 1, an das ein trichterförmiger Füllstutzen 2 anschließt, der an den Auslauf einer nicht dargestellten Füllmaschine angesetzt wird. Durchmesser, Länge und Form sowie Konizität des Wurstfüllrohres sind je nach Art der Füllmaschine verschieden. Das Wurstfüllrohr besteht zwechmäßigerweise aus Edelstahl, beispielsweise V2A 1.4301 oder 1.4541 und hat eine hochfeine, normalerweise polierte Oberfläche.

Im Betrieb wird der zu füllende Darm über einen Mündungsstutzen 3 des Rohrs 1 gezogen. Eine nicht dargestellte Darmbremse umgreift den Darm und drückt ihn gegen die Oberfläche des Mündungsstutzens 3. Die Bremse soll ein Wegziehen oder gar Wegblasen des Darmes durch die ausgepreßte Wurstmasse verhindern. Es hat sich gezeigt, daß manche Därme einen außerordentlich geringen Reibwert haben und damit eine glatte Oberfläche aufweisen. Auch durch hohen Bremsdruck lassen sich solche Därme nicht in dem erforderlichen Ausmaß festhalten.

Gemäß Erfindung ist die Oberfläche 4 des Mündungsstutzens 3 aufgerauht. In einer Ausführungsform ist die gerauhte Oberfläche 4 durch Bandschleifen rauhgeschliffen, wobei man beispielsweise ein Schleifband mit einer Körnung von 20 bis 40 verwendet, d. h. ein Schleifband, das je cm² Bandoberfläche 20 bis 40 Sandkörner aufweist. Die aufgerauhte Oberfläche 4 erhöht den Reibwert gegenüber dem Darm, so daß mit geringem Bremsdruck eine ausreichende Abbremsung des Darmes erzielbar ist.

In einer Ausführungsform ist der Mündungsstutzen 3 Teil des Rohres 1. In einer anderen Ausführungsform ist der Mündungsstutzen 3 ein eigenes Teil, das in das Rohr 1 eingeschraubt ist. Die Trennlinie verläuft an der Trennstelle 5. Dadurch ist es möglich, bei abgeschliffener Oberfläche 4 den Mündungstutzen 3 allein auszutauschen und das übrige Rohr 1 weiter zu verwenden.

Um ein zu schnelles Abschleifen der aufgerauhten Oberfläche 4 des Mündungsstutzens 3 zu verhindern, wird die aufgerauhte Oberfläche 4 vorteilhafterweise gehärtet, und zwar auf für den Fachmann bekannte Weise. Ein zweckmäßiges Verfahren ist dabei dabei das Nitrieren. Weitere geeignete Härtungsverfahren sind in der Beschreibungseinleitung erwähnt.

## Patentansprüche

1. Wurstfüllrohr mit einem trichterförmigen Füllstutzen (2) und einem Mündungsstutzen (3), über den im Betrieb der Darm gezogen und von einer Darmbremse angepreßt wird, **dadurch gekennzeichnet**, daß der Mündungsstutzen (3) eine gerauhte Oberfläche (4) hat.

2. Wurstfüllrohr nach Anspruch 1, **dadurch gekennzeichnet**, daß die gerauhte Oberfläche (4) des Mündungsstutzens (3) rauhgeschliffen ist.

3. Wurstfüllrohr nach Anspruch 1 oder 2, **dadurch gekennzeichnet**, daß der Mündungsstutzen (3) in das Rohr (1) eingeschraubt ist.

4. Wurstfüllrohr nach Anspruch 1 oder 2, **dadurch gekennzeichnet**, daß der Mündungsstutzen (4) lösbar mit dem Rohr (1) verbunden ist.

5. Wurstfüllrohr nach Anspruch 4, **dadurch gekennzeichnet**, daß die lösbare Verbindung des Mündungsstutzens (3) mit dem Rohr (1) durch eine Steckverbindung, eine Klemmverbindung, einen Bayonette-Verschluß o. ä. hergestellt ist.

## Claims

1. Sausage stuffing horn comprising a funnel-shaped filling portion (2) and an outlet portion (3) over which a casing is pulled in use and is pressed thereon by a casing retainer, characterised in that the outlet portion (3) has a roughened surface (4).

2. Sausage stuffing horn according to claim 1, characterised in that the roughened surface (4) of the outlet portion (3) is rough-ground.

3. Sausage stuffing horn according to claim 1 or 2, characterised in that the outlet portion (3) is screwed into the horn (1).

4. Sausage stuffing horn according to claim 1 or 2, characterised in that the outlet portion (3) is connected to the horn (1) releasably.

5. Sausage stuffing horn according to claim 4, characterised in that the releasable connection of the outlet portion (3) to the horn (1) is obtained by plug-and-socket connection, clamp connection, bayonet connection or similar.

## Revendications

1. Cornet de bourrage de saucisses comprenant une tubulure de remplissage (2) en forme d'entonnoir et une tubulure d'embouchure (3), par-dessus laquelle on enfile, lors de l'utilisation, un boyau qui y est serre par un frein de boyau, caractérisé en ce que la tubulure d'embouchure (3) présente une surface rugueuse (4).

2. Cornet de bourrage de saucisses selon la revendication 1, caractérisé en ce que la surface rugueuse (4) de la tubulure d'embouchure (3) est rendue rugueuse par ponçage.

3. Cornet de bourrage de saucisses selon la revendication 1 ou 2, caractérisé en ce que la tubulure d'embouchure (3) est vissée dans le tube (1).

4. Cornet de bourrage de saucisses selon la revendication 1 ou 2, caractérisé en ce que la tubulure d'embouchure (4) est reliée de façon démontable au tube (1).

5. Cornet de bourrage de saucisses selon la revendication 4, caractérisé en ce que la liaison démontable entre la tubulure d'embouchure (3) et le tube (1) est réalisée sous forme d'un montage par emmanchement, un montage à serrage, un accouplement à baïonnette, ou similaire.
